Europäisches Patentamt

**European Patent Office**

**Office européen des brevets**

(19)

(11) Publication number: **0 175 359 B1**

## (12) EUROPEAN PATENT SPECIFICATION

(45) Date of publication of patent specification: **05.02.92**   (51) Int. Cl.⁵: **G06F  1/00**

(21) Application number: **85111819.0**

(22) Date of filing: **18.09.85**

(54) **Apparatus for providing security in computer systems.**

(30) Priority: **20.09.84 US 652787**

(43) Date of publication of application:
**26.03.86 Bulletin  86/13**

(45) Publication of the grant of the patent:
**05.02.92 Bulletin  92/06**

(84) Designated Contracting States:
**BE DE FR GB**

(56) References cited:
**EP-A- 0 067 611**
**US-A- 3 806 882**
**US-A- 4 446 519**
**US-A- 4 471 163**

**IEEE SPECTRUM, vol. 9, no. 1, January 1972,
pages 67-78, US; C.W. BEARDSLEY: "Is your
computer insecure?"**

(73) Proprietor: **WANG LABORATORIES INC.
One Industrial Avenue
Lowell, MA 01851(US)**

(72) Inventor: **Bakhmutsky, David
341 Pawtucket Blvd. No. 22
Lowell, MA. 01854(US)**
Inventor: **Fu, Andrew Nelson
156 Reed Street
Lexington, MA. 02173(US)**
Inventor: **Gould, Kirk Benson
307 Pawtucket Blvd. No. 23
Lowell, MA. 01854(US)**

(74) Representative: **Behrens, Dieter, Dr.-Ing. et al
Wuesthoff & Wuesthoff Patent- und Recht-
sanwälte Schweigerstrasse 2
W-8000 München 90(DE)**

Rank Xerox (UK) Business Services

## Description

This invention relates to an apparatus for protecting against unauthorized equipment access to a computer system wherein a number of pieces of first equipment and a system controller are interconnected by a communications link over which they operate with each other, the apparatus comprising:
a plurality of identical keys, with one key each being associated with each piece of the first equipment and with the system controller,
the system controller transmitting a first signal representing a first binary number to its associated key and over the communications link to the key associated with each piece of the first equipment,
each key including first means for generating a second signal representing a second binary number in response to each first signal,
the first means including second means for responding to each possible first signal to generate a second signal unique to each said first signal, said second signals being the same for all keys,
the second signal being returned over the communications link to the system controller,
the system controller comparing the second signal with the second signal generated at its associated key,
a match between the second signal generated by the key associated with any particular piece of first equipment and the second signal generated by the key associated with said system controller indicating that the particular piece of first equipment is authorized to be connected to said communications link and to function in said computer system.

Security in computer systems is almost non-existent and hardly a week goes by that one reads in the newspapers of people using small computers and modems to break into computer systems and gaining access to and altering information in schools, banks, businesses, and even military installations. These breakins often are not being accommplished by professionals, but by relative novices such as high school students. It can only be imagined what breakins are taking place and going undetected that are accomplished by professionals. One recent example of a breakin by professionals involved obtaining confidential information and then using it in the stock market to make profit in buying and selling stocks.

One approach widely used in the prior art to provide security in computer systems has been the use of passwords. This approach has only been marginally effective, because those attempting to break into a computer system have programmed their computers to try different permutations of digits for telephone numbers and automatically dialing same until a telephone port input to a computer system is found, and then permutations of characters are generated and tried as passwords until access to the computer system is obtained. While this description is a bit oversimplified, it roughly describes how some unauthorized access is being made into computer systems.

With this deplorable lack of security in computer systems there is presently a tremendous need in the art for methods and apparatus to be used in computer systems to prevent unauthorized usage of equipment and systems.

Another approach to improving computer access security is described in US patent specification 3,806,882 and is reflected in the introductory portion of claim 1. The exchange of codes between a central computer system and its users, and their comparison by the system to determine whether access is authorized, is known from IEEE SPECTRUM, Vol. 9, no. 1, January 1972, pages 67-68, US; C.W. Beardsley, "Is your computer insecure ?". Multiple users may have identical keys. When computer equipment connected into a computer system is not authorized to be connected to the system, service is then denied.

An object of the invention as defined in the claims is to provide an even further improved solution to this computer security problem and to provide a system that also does not rely on telephone numbers and passwords that may be determined too easily.

In accordance with the teaching of the invention, an apparatus is provided to prevent unauthorized access to and/or service by a computer system, that is not dependent upon passwords. The preferred embodiment of the invention as disclosed herein is basically practiced in hardware form, with the hardware being on an integrated circuit chip, and a small amount of computer program or software controlling the application of signals to, and receiving signals from, the circuit chip. In operation, each piece of computer equipment that has authorized access to a computer system has one of the circuit chips connected thereto as a sort of 'key'. The master controller of the computer system also has one of the circuit chip 'keys' connected thereto, and utilizes the aforementioned software to check the 'key' associated with each computer or any other equipment attempting to gain access to the computer system.

The integrated circuit chip keys function in the following manner to check for authorized access to a computer system. Any piece of equipment attempting to gain access to or service by any of the equipment of the computer system must do so with the help of the system master controller as is known in the art. When the system master controller detects a piece of equipment connected to a port of the system it sends an address to the port which will access the 'key' associated with the equipment. Then the system controller transmits a random number to the 'key' which responds thereto according to its internal design to generate a number in the range of 0 - $2^{31}$. The number generated by the 'key' chip is returned to the master controller. The master controller also applies the same random number to its own 'key' chip. Because the 'key' chip in the master controller is identical to the 'key' chip in the last mentioned piece of equipment the numbers output from both 'keys' are identical. In the present invention the system master controller compares the numbers output from its own 'key' chip and the 'key' chip of the equipment being checked. If there is a match between the two numbers the system master controller knows that the equipment is authorized to be connected to the system and to operate therewith. In the event that there is not a match between the numbers output from both 'key' chips, the system master controller denies the equipment being checked from accessing anything or being serviced by the system. In this manner, even though someone may use permutations of numbers to identify and access a telephone port into a telephone system, they cannot use the same procedure to identify passwords because there are none, and they are prevented from doing anything in the computer system. Thus a breakin may only go as far as the telephone connection to the computer system, but no service or other access may be obtained. In this manner computer system security is greatly increased.

The present invention also provides a way of checking the operational integrity of the communications link that interconnects all equipment in the computer system. As is well known in the art a communications link interconnecting equipment and used so that the equipment may operate together is a bus structure having different portions for functions such as addressing, control and data, or a serial interface providing parallel/serial conversion. With the operation briefly described above the integrity of the communications link may also be checked. If the operation of the invention indicates that unauthorized access to the computer system is being attempted and yet it is known that the equipment connected to a particular part is authorized, there is a problem with the communications link. To perform this function the system master controller uses records that it keeps of unauthorized access attempts so that they may be checked. If unauthorized access attempts keep appearing for particular system ports and a check shows that they are not unauthorized access attempts, it is then known that there is a problem with the communications link.

The invention will be better understood upon reading the following detailed description in conjunction with the drawings in which:

Figure 1 is a simplified block diagram of a typical computer system in which the present invention may be utilized; and

Figure 2 is a block diagram of the circuitry in an integrated circuit chip which is a computer system 'key' in accordance with the teaching of our invention.

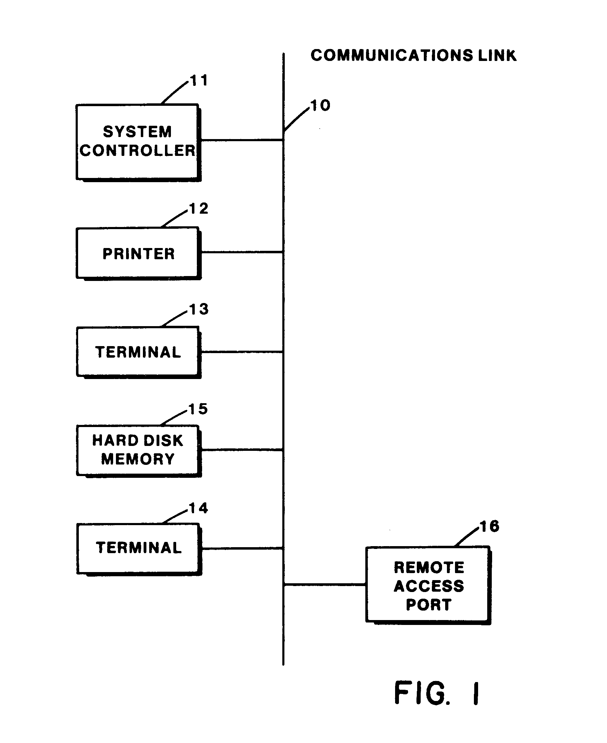

In Figure 1 is shown a typical computer system with which the present invention may be utilized. The computer system may be as small as a desk top computer terminal with some peripherals plugged therein, or the computer system may be a larger system having one, and usually more, desk top type computer terminals 13,14 that are interconnected with a system controller 11, which in itself is a computer, via a communication link 10. In addition, other computer peripheral equipment are connected to communication link 10 to be used by terminals 13 and 14, and system controller 11. Examples of other computer peripheral equipment are printer 12 and hard disk (large capacity) memory 15. Many other types of equipment known in the art, but not shown here, may also be connected to communications link 10. In addition, many computer systems have ports for remote access, such as telephone dial up access. This is represented in Figure 1 by remote access port 16. As mentioned previously someone may break into a computer system by either hooking up to an unused port of the system, or may discover or otherwise obtain a telephone number allowing access to the computer system via remote access port 16. The facilities of the computer system may then be used. Also as previously mentioned, once basic access is obtained to the computer system programmed automated by programming trial and error techniques may be used to discover passwords that allow access to restricted files stored in memory in the computer system, or allow access to other restricted equipment functions or programs.

In implementing the present invention an integrated circuit 'key' is used with each piece of equipment that is authorized to have access to a computer system. All keys for a system must be the same. System controller 11 has one of these keys as well as a small amount of computer programming (software) for defining the system operation with the keys. Under control of the software, system controller 11 generates a random thirty-two bit number which it applies to its own key and to the key associated with each of equipments 12, 13, 14, and 15. In response to the random number input to each of the identical keys, they each generate another thirty-two bit number, and the numbers generated by the keys are all the same. System controller 11, under the control of the security software, compares the number generated by the key in each of equipments 12, 13, 14, and 15 with the number generated by its own key. Where there is a match of numbers controller 11 knows that the equipment is authorized to operate in the computer system. When there is no match, as will occur when an unauthorized terminal or other equipment is connected to the computer system, controller 11 knows that it is an unauthorized connection and does not permit the equipment to function in the system in any capacity.

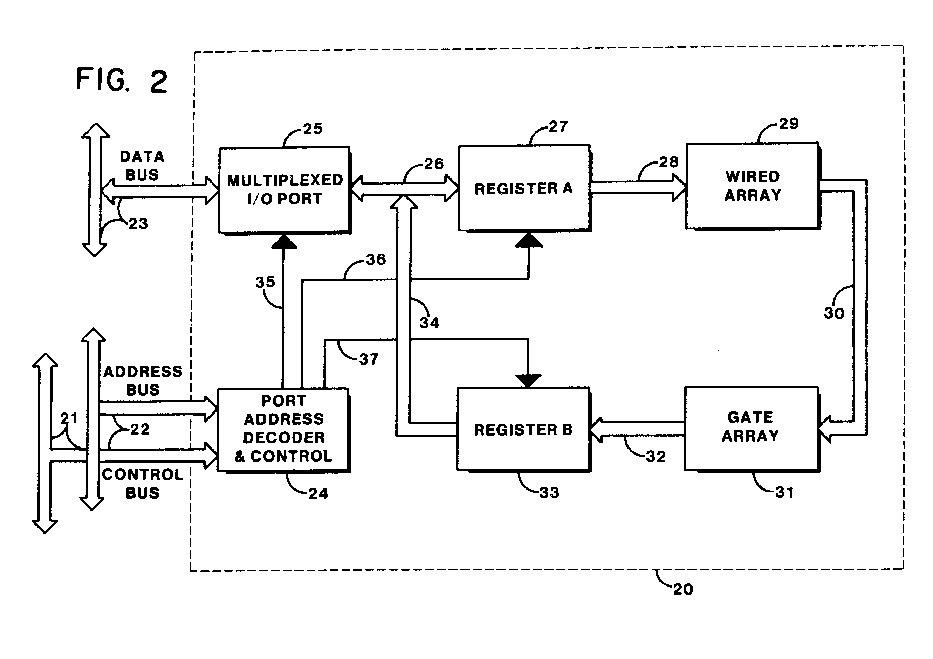

Turning to Figure 2, therein is shown a block diagram of an integrated circuit chip 'key' 20 in accordance with the teaching of the present invention. A key is associated with each piece of equipment that is authorized to be connected to the computer system. The chip may be in a modular form that may be plugged into a slot in equipment 11, 12, 13, 14, and 15, or it may be permanently mounted within the equipment. Plug in operation would permit changing the keys whenever desired for increased security. However, as will be described further in this specification the keys have a programmable feature that permits increased security equivalent to changing the keys.

Integrated circuit chip or key 20 in Figure 2 has input/outputs by which it is connected to a control bus 21, address bus 22 and data bus 23 within the piece of equipment with which it is associated. Busses 21, 22 and 23 are all really part of one main bus and are in turn connected to communications link 10 in a manner well known in the art. Communications link 10 carries the signal on busses 21, 22, and 23 are also carried thereon to other equipments connected to communications link 10. The operation of these portions of a main bus are well known so are not described in detail herein. Of necessity the operation of these portions of a main bus are the same whether they are within a piece of equipment or are part of communications link 10. When one piece of equipment needs to be connected to another piece of equipment it first obtains exclusive use of the communications link 10. Once an originating piece of equipment obtains exclusive access to the communications link, it places a number on the address bus 22 which identifies a piece of equipment it wants to be connected to. Signals are also placed on control bus 21 to control the operation of the receiving equipment. The piece of equipment being addressed recognizes its address. Data is transferred to and/or therefrom via data bus 23. After the originating equipment is through with the receiving piece of equipment the control of the communications link is relinquished.

With respect to the present invention an integrated circuit chip 'key' 20 is associated with each of equipments 11, 12, 13, 14, and 15 as briefly mentioned above. Circuit 20 has three basic input/outputs other than power, etcetera, that are well known in the art. These three input/outputs are an address bus 22, a control bus 21, and a data bus 23. These three input/outputs are interconnected via communications link 10. Thus, these three basic busses are interconnected for all pieces of equipment. System controller 11 is programmed to frequently check all equipment connected to communications link 10 to determine if any equipment is unauthorized to be connected thereto and receive service. Under control of the software it first addresses its own integrated circuit chip 'key' 20 by placing an address on address bus 22. Then signals are placed on control bus 21 to control the operation of its own circuit 20 which it has addressed to receive a randomly generated number that system controller 11 then places on data bus 23. Circuit 20 associated with system controller 11 responds to the number on data bus 23 to generate a resultant binary number which is then returned to controller 11 via data bus 23 under control of controller 11 using control bus 21. System controller 11 stores this number generated by its circuit 20. System controller 11 still has control of communications link 10 and sequentially transmits the address of each of equipments 12, 13, 14, and 15 over the address bus 22 portion of communications link 10 to gain access and control of each of these equipments. While ones of these equipments are addressed, system controller 11 places a signal on control bus 21 which prepares the selected circuit 20 to receive a number over data bus 23. System controller 11 then transmits to the selected circuit 20 the randomly generated binary number that it previously input to its own circuit 20. The selected circuit 20 responds to the binary number it receives in the identical manner as did circuit 20 associated with system controller 11 to generate the same resultant binary number. System controller 11 places another signal on control bus 21 which causes this resultant binary number to be placed on data bus 23 via which it is returned to system controller 11. System controller 11 compares the resultant binary number it receives over data bus 23 with the stored resultant binary number generated by its own circuit 20. If these two resultant binary numbers are identical, system controller 11 knows that the piece of equipment the associated circuit 20 of which has just been polled is authorized to be connected to communications link 10 and to receive service from other equipment authorized to be connected to link 10. This process is repeated in sequence for each piece of equipment connected to communications link 10. When the above described operation is performed with a piece of equipment and the wrong or no resultant binary number is obtained system controller makes a record of same as an unauthorized attempt to gain access to the computer system via communications link 10 and refuses service to the unauthorized equipment. In this manner the integrity of the computer system is maintained and unauthorized equipments cannot gain access thereto. In the event that a remotely located piece of equipment gains initial access to communications link 10 via remote access port 16, the remote equipment must also have an integrated circuit chip 'key' 20 which will be checked by system controller 11 as previously described. A person connecting via say a telephone link and a modem (both not shown) to remote access port 16 can then only gain access to the computer system if they have a 'key' circuit 20 to use with their remote equipment. No amount of transmitting permutations of characters will ever yield a code or password which will provide access to the computer system.

The details of the operation of 'key' circuit 20 shown in Figure 2 are now described in detail. System controller 11 first selects the equipment connected to a particular port of the computer system by first gaining control of communications link 10 and then placing an address on the address bus 22 portion thereof. Circuit 20 has a port address decoder and control circuit 24 which recognizes its own address. When it recognizes its own address it knows that its associated piece of equipment is being addressed, and it places itself in a state to look for and respond to control signals on control bus 21. It also returns a signal on control bus 21 to controller 11 as on acknowledgment. System controller 11 then places a binary number on control bus 21 which is received in parallel format by decoder and control circuit 24 which decodes same and applies a signal via internal lead 35 to multiplexed input/output port circuit 25. Circuit 25 responds to this signal from decoder and control circuit 24 to be placed in a state to receive in parallel format the next binary signal appearing on data bus 23. The next binary number appearing on data bus 23 is the previously mentioned randomly generated number output from system controller 11 in parallel format on data bus 23.

The randomly generated number received in parallel format by circuit 25 is applied over multiwire path 26 to be stored in A register 27. Decoder and control circuit 24 also responds to the control signals it receives over control bus 21 to apply a signal to lead 36 which causes A register 27 to store the received number, and then to apply it in parallel format via multiwire path 28 to wired array 29. Wired array 29 is used to encode the number originally transmitted from system controller 11 and now stored in A register 27 by changing the order of the bits of the binary number. That is, for a very simple example, if the number stored in A register 27 is 1001101, the output from wired array 29 onto multiwire path might be 0011101. All 'key' circuits 20 associated with other authorized equipment have the same encoding in their wired array 29 and would all output the same binary number in response to the same input binary number. While in the preferred embodiment of the invention logic implemented by gate array 31 is in essence hard wired and is not easily changeable, in an alternative embodiment of the invention circuit 31 may be remotely programmable by system controller 11, or locally programmable by using DIP switches or software in an obvious manner. When gate array 31 is programmable there is no need for wired array circuit 29.

The number encoded by wired array 29 and output therefrom in parallel format is then applied in parallel format to gate array 31 which is made up of XOR or XNOR gates connected to implement a logic function which translates any number applied thereto in the range of 0 to $2^{31}$ into another number in the range of 0 to $2^{31}$ at its output. Thus, the binary number output from wired array 29 and input to gate array 31 is transformed by array 31 into the previously mentioned 'resultant binary number'. This resultant binary number is stored in parallel format in B register 33 under control of a control signal output from decoder and control circuit 24 on lead 37. The resultant binary number now stored in B register 33 is applied over multiwire path 34 to the input of A register 27 in which it is now stored. At the same time the resultant binary number will be returned to system controller 11 via communications link 10 to be compared to the resultant binary number generated by the circuit 20 associated with system controller 11. This is done in the following manner. At this point in time system controller 11 transmits another signal over control bus 21 which is responded to by port address decoder and control circuit 24 to place a signal on lead 35 which causes multiplexed input/output port 25 to function as an output port and output the resultant binary number on multiwire path 26 to data bus 23 where it returned to system controller 11 for the previously described resultant number comparison.

As mentioned in the last paragraph the resultant binary number is also stored in A register 27. This resultant binary number is then subsequently used the next time system controller 11 checks all equipment connected to communications link 10 for unauthorized access. At that time system controller 11 transmits an address over address bus 22 and a control signal over control bus 21 to which port address decoder and control circuit 24 responds to place a signal on lead 36 which will cause the previous resultant binary number that has been stored in A register 27 to be read out therefrom and input in parallel format to wired array 29 and then gate array 31 as previously described to generate a new resultant binary number. The new resultant binary number is returned to controller 11 and stored in A register 27 for the next time that system controller 11 checks the ports of communications link 10 for unauthorized equipment.

The system controller may also vary this operation of using a previously generated resultant binary number, and instead of reading out the previous number, it may transmit a new binary number to each circuit 20 to overwrite any number previously stored in A register 27.

It is apparent from the above description of wired array 29 and logic array 31 that each of the 31 bits of each random "key" number generated by a key circuit 20 may be regarded as a logical OR/XOR combination of selected bits of a corresponding input number. The particular 31 such combinations "wired" into the wired array 29 and logic array 31 of a key circuit 20 defines the particular "key" generated by that key circuit 20. The generation of such "keys", that is, random numbers, and the specific connections between input bits and OR/XOR operations and the specific OR/XOR operations performed to generate such random number "keys" are determined by techniques known in the art. By way of example, the paper titled "FAST HARDWARE RANDOM NUMBER GENERATOR FOR THE TAUSWORTHE SEQUENCE" by Meir Barel of the Technical University of Aachen, West Germany is incorporated herein by reference.

As also previously described, system security depends at least in part upon the total possible number of "key" combinations which may be generated by key circuit 20. For this reason, it is preferable to maximize the total possible number of "key" combinations which may be generated by a key circuit 20. In a preferred embodiment, therefore, the logical operations performed by both wired array 29 and logic array 31 are programmable. That is, both the selection of input bits into each of the 31 OR/XOR operations of logic array 31 and each of the OR/XOR operations performed upon those input bits are individually programmable.

This is preferably achieved, in the present embodiment, by incorporating at least wired array 29 and logic array 31 into a custom VLSI integrated circuit chip In this embodiment, wired array 29 and logic array 31 thereby effectively comprise a single ciruit wherein the particular combinations of input connections into the OR/XOR functions and the individual OR/XOR operations are programmable, either during manufacture or at a later time. The techniques for manufacturing programmable custom VSLI circuits are well known in the art, for exmple, in Programmable Logic Array technology.

In a further preferred embodiment of the present key circuit 20, A register 27, B register 33 and decoder and control circuit 24 are also incorporated into the VLSI chip with wired array 29 and logic array 31. By incorporating these elements into the single chip, the portions of key circuit 20 which are readily accessible for investigation are substantially reduced. System security is thereby enhanced in that it is more difficult to determine the operations performed by key circuit 20.

In the above description only single numbers are described as being transmitted over data bus 23. This operation is fine if the number of leads making up data bus 23 is equal to or larger than the number of bits of the randomly generated binary number transmitted from system controller 11, or the resultant binary numbers returned from key circuits 20 to system controller 11. In the preferred embodiment of the invention data bus 23 has fewer leads than the number of bits of the randomly generated binary numbers. Most small computer systems today use either eight-bit wide words or sixteen-bit wide words and that is the size of their respective data busses. To increase the difficulty of breaking the encryption built into the 'key' circuits 20, the randomly generated and resultant binary numbers are thirty-one bits wide. It has a zero before its highest order bit to make it a thirty two bit number. This requires that this number be broken up and transmitted byte wise serial in a manner well known in the art. If there is an eight-bit data bus, the thirty-two bit number is broken up into a total of four eight-bit numbers which are then serially transmitted over communications link 10 to 'key' circuits 20. If there is a sixteen-bit data bus, the thirty-two bit number is broken up into a total of two sixteen-bit numbers which are then serially transmitted over communications link 10 to 'key' circuits 20. To accommodate this byte wise serial operation, the control signals sent by system controller 11 over control bus 21 to a circuit 20 are a little more complex. While port address decoder and control circuit 24 is under control of control signals on control bus 21 to keep multiplexed input/output port 25 operating as an input port for all bytes making up the randomly generated number, the control signals output from decoder and control circuit 24 must control A register 27 to address adjacent portions of register 27 so that as each byte is serially received it is stored in adjacent portions of register 27 to properly reconstruct the original large randomly generated binary number used to generate a resultant binary number as previously described.

When power is turned off and then on to a piece of equipment, or a new piece of equipment is validly connected to communications link 10, a problem arises even if the equipment has a key associated therewith. When system controller 11 polls equipment the residual resultant number stored in A register 27 of the other equipment connected to communications link 10, including system controller 11, is not stored in A register 27 of the new piece of equipment or the equipment that has had its power turned off and on. These are common occurrences. With these situations system controller 11 will not have a number match during polling and could deny access to the computer system, even though the equipments may validly be connected to communications link 10. To overcome this problem, when system controller 11 does not detect a number match during polling a piece of equipment, it reverts to an operation described in detail previously in this specification. Controller 11 addresses the suspect piece of equipment and attempts to load a number in A register 27 its key 20 that should be therein if the suspect piece of equipment is authorized to have access to the computer system and has a key 20. More particularly, system controller 11 keeps a record of the resultant number that it previously had stored in its A register 27, and after addressing the suspect piece of equipment it loads the same previous resultant number in the A register 27 in the manner previously described. If the suspect piece of equipment is authorized to be connected to the computer system its key will be identical to the keys of the other equipments connected to communications link 10 and the new resultant number read out of the key will match that currently in A register 27 of system controller 11. If there is no resultant number match, system controller knows that the suspect piece of equipment being tested as just described does not have authorization to be connected to communications link 10 of the computer system. In an alternative operation, when power has been turned off to any equipment connected to communications link 10, or a new piece of equipment has been connected, a system administrator will have to reinitialize the whole system by starting with reloading A register 27 in the key 20 of every piece of equipment connected to communications link 10. System controller 11 then polls every piece of equipment connected to communications link 10 and should have resultant number matches when only authorized equipment is connected to link 10.

Also, different encrypting schemes may be used in gate array 31. Further, rather than practicing the invention with hardware keys that are polled under the control of software stored in the system controller, the function of the keys may be emulated in software and then loaded into and used with equipment that has a processor therein. Also, the hardware keys need not be directly accessible by the system controller. The keys may be polled and operated by a processor within the piece of equipment with which a particular key is associated. The system controller then may send simpler signals over the communications link to the processor within such a piece of equipment in order to perform the unauthorized equipment check. In this last embodiment the software peculiar to the pieces of equipment and not the system controller may be stored in a plug in ROM cartridge form. Further, gate array 31 may also be programmable to change the number encoding encryption accomplished therein.

## Claims

1. Apparatus for protecting against unauthorized equipment access to a computer system wherein a number of pieces (12, 13, 14, 15, 16) of first equipment and a system controller (11) are interconnected by a communications link (10) over which they operate with each other, said apparatus comprising:

   a plurality of identical keys, with one key (20) each being associated with each piece (12, 13, 14, 15, 16) of said first equipment and with said system controller (11),

   said system controller transmitting a first signal representing first binary number to its associated key (20) and over the communications link (10) to the key (20) associated with each piece (12, 13, 14, 15, 16) of said first equipment,

   each key (20) including first means (29, 31) for generating a second signal representing a second binary number in response to each said first signal,

   the first means (29; 31) including second means (31) for responding to each possible first signal to generate a second signal unique to each said first signal, the second signals being the same for all keys (20),

   the second signal being returned over the communications link (10) to said system controller (11),

   the system controller (11) comparing the second signal with the second signal generated at its associated key (20),

   a match between the second signal generated by the key (20) associated with any particular piece (12, 13, 14, 15, 16) of first equipment and the second signal generated by the key (20) associated with the system controller (11) indicating that the particular piece (12, 13, 14, 15, 16) of first equipment is authorized to be connected to the communications link (10) and to function in the computer system, characterized in that:

the first means (29; 31) further includes encoding means (29) for changing the order of the bits in the first signal prior to applying the first signal to the second means (31).

2. The apparatus in accordance with claim 1 characterized by
means (25, 27) for receiving the first signal from the system controller (11), the receiving means (25, 27) comprising memory means (27) for storing the first signal before it is encoded by the encoding means (29).

3. The apparatus in accordance with claim 2 characterized in that
the key (20) further comprises control means (24) responsive to the system controller (11) for storing the first signal in the memory means (27), and for transferring the second signal via the communications link (10) to the system controller (11).

4. The apparatus in accordance with claim 3 characterized in that
the receiving (25, 27) means further comprises porting means (25) responsive to the control means (24) either to receive the first signal from the system controller (11) or to transmit the second signal from the key (20) to the system controller (11).

**Revendications**

1. Appareil pour protéger de l'accès par un équipement non autorisé un système d'ordinateurs dans lequel un nombre de matériels (12, 13, 14, 15, 16) d'un premier équipement et une unité de commande du système (11) sont reliés les uns aux autres par une ligne de communication (10) à travers de laquelle ils fonctionnent les uns avec les autres, ledit appareil comprenant:
une multitude de touches identiques dont une (20) chacune est associée à chacun des matériels (12, 13, 14, 15, 16) dudit premier équipement et à l'unité de commande du système (11), ladite unité de commande du système transmettant un premier signal représentant un premier nombre binaire, à la touche (20) à elle associée et à travers la ligne de communication (10) à la touche (20) associée à chacun des matériels (12, 13, 14, 15, 16) dudit premier équipement,
chacune des touches (20) comprenant des premiers moyens (29, 31) capables de générer un second signal représentant un second nombre binaire, en réponse à chacun desdits premiers signaux,

les premiers moyens (29; 31) comprenant un second moyen (31) capable de répondre à chaque premier signal possible, de manière à générer un second signal univoquement relié avec chacun desdits premiers signaux, les seconds signaux étant les mêmes pour toutes les touches (20),
le second signal étant renvoyé à travers la ligne de communication (10) à l'unité de commande du système (11),
l'unité de commande du système (11) effectuant une comparaison entre le second signal et le second signal généré par la touche (20) à elle associée,
une correspondance entre le second signal généré par la touche (20) associée à un matériel donné (12, 13, 14, 15, 16) du premier équipement et le second signal généré par la touche (20) associée à l'unité de commande du système (11) indiquant que le matériel donné (12, 13, 14, 15, 16) du premier équipement est autorisé à être branché sur la ligne de communication (10) et à fonctionner dans le système d'ordinateurs, ledit appareil caractérisé en ce que en outre, les premiers moyens (29; 31) comportent un moyen de codage (29) capable de changer l'ordre des bits dans le premier signal avant l'application du premier signal au second moyen (31).

2. L'appareil selon la revendication 1, caractérisé par
des moyens (25, 27) capables de recevoir le premier signal venant de l'unité de commande du système (11), les moyens recevants (25, 27) comprenant un moyen de mémorisation (27) capable de stocker le premier signal avant que ce dernier ne soit codé par le moyen de codage (29).

3. L'appareil selon la revendication 2, caractérisé en ce que
en outre, la touche (20) comprend un moyen de commande (24) qui répond à l'unité de commande du système (11) de manière à stocker le premier signal dans le moyen de mémorisation (27), et capable de transmettre le second signal à travers la ligne de communication (10) à l'unité de commande du système (11).

4. L'appareil selon la revendication 3, caractérisé en ce que
en outre, les moyens recevants (25, 27) comportent un moyen de connexion (25) qui répond au moyen de commande (24) de manière soit à recevoir le premier signal venant de l'unité de commande du système (11), soit à transmettre le second signal venant de la touche (20) à l'unité de commande du système (11).

## Patentansprüche

1. Vorrichtung zum Schutz gegen den Zugriff unberechtigter Ausrüstungen auf eine Rechneranlage, in der eine Vielzahl von Geräten (12, 13, 14, 15, 16) einer ersten Ausrüstung und eine Systemsteuereinrichtung (11) durch eine Übermittlungsleitung (10) miteinander verbunden sind, über welche sie miteinander arbeiten, wobei die Vorrichtung umfaßt:
eine Vielzahl gleicher Tasten, wobei je eine Taste (20) jedem der Geräte (12, 13, 14, 15, 16) der ersten Ausrüstung und der Systemsteuereinrichtung (11) zugeordnet ist,
dabei die Systemsteuereinrichtung ein eine erste Binärzahl darstellendes Signal der ihr zugeordneten Taste (20) und über die Übermittlungsleitung (10) der jedem Gerät (12, 13, 14, 15, 16) der ersten Ausrüstung zugeordneten Taste (20) übermittelt,
jede Taste (20) eine erste Einrichtung (29, 31) zum Generieren eines eine zweite Binärzahl darstellenden zweiten Signals in Abhängigkeit von jedem der ersten Signale aufweist,
die erste Einrichtung (29; 31) eine zweite Einrichtung (31) zum Antworten auf jedes mögliche erste Signal aufweist, derart, daß ein mit jedem der ersten Signale eindeutig verbundenes zweites Signal erzeugbar ist, wobei die zweiten Signale für alle Tasten (20) gleich sind,
das zweite Signal über die Übermittlungsleitung (10) an die Systemsteuereinrichtung (11) zurückgeleitet wird,
die Systemsteuereinrichtung (11) das zweite Signal mit dem an der ihr zugeordneten Taste (20) generierten zweiten Signal vergleicht,
eine Übereinstimmung zwischen dem von der jedem bestimmten Gerät (12, 13, 14, 15, 16) der ersten Einrichtung zugeordneten Taste (20) erzeugten zweiten Signal und dem von der der Systemsteuereinrichtung (11) zugeordneten Taste (20) erzeugten zweiten Signal anzeigt, daß das bestimmte Gerät (12, 13, 14, 15, 16) der ersten Einrichtung zum Anschluß an die Übermittlungsleitung (10) und zum Arbeiten in der Rechneranlage berechtigt ist,
dadurch gekennzeichnet, daß
die erste Einrichtung (29; 31) ferner eine Kodiereinrichtung (29) zum Ändern der Bitfolge im ersten Signal vor der Übertragung des ersten Signals an die zweite Einrichtung (31) aufweist.

2. Vorrichtung nach Anspruch 1,
gekennzeichnet durch
Einrichtungen (25, 27) zum Empfangen des ersten Signals von der Systemsteuereinrichtung (11), wobei die empfangenden Einrichtungen (25, 27) eine Speichereinrichtung (27) zum Speichern des ersten Signals vor seiner Kodierung durch die Kodiereinrichtung (29) umfassen.

3. Vorrichtung nach Anspruch 2,
dadurch gekennzeichnet, daß
die Taste (20) ferner eine Steuereinrichtung (24) umfaßt, welche in Abhängigkeit von der Systemsteuereinrichtung (11) das erste Signal in der Speichereinrichtung (27) zu speichern und das zweite Signal über die Übermittlungsleitung (10) an die Systemsteuereinrichtung (11) zu übermitteln vermag.

4. Vorrichtung nach Anspruch 3,
dadurch gekennzeichnet, daß
die empfangenden Einrichtungen (25, 27) ferner eine Anschlußeinrichtung (25) umfassen, die in Abhängigkeit von der Steuereinrichtung (24) entweder das erste Signal von der Systemsteuereinrichtung (11) zu empfangen oder das zweite Signal von der Taste (20) an die Systemsteuereinrichtung (11) zu übermitteln vermag.

COMMUNICATIONS LINK

SYSTEM CONTROLLER — 11

10

PRINTER — 12

TERMINAL — 13

HARD DISK MEMORY — 15

TERMINAL — 14

REMOTE ACCESS PORT — 16

FIG. I

FIG. 2

EP 0 175 359 B1